# FASCICULE DE BREVET EUROPEEN

(11) **EP 0 500 450 B1**
(45) Date de publication et mention de la délivrance du brevet: **14.05.1997**
(21) Numéro de dépôt: 92400425.2
(22) Date de dépôt: 18.02.1992
(51) Int. Cl.: H04Q 11/04

(54) **Agencement de communication entre des terminaux de données d'une installation numérique à intégration de services et d'autres terminaux de données desservis par un réseau téléphonique commuté et procédé correspondant**
Einrichtung und Verfahren für die Herstellung einer Verbindung zwischen ISDN-Datengeräten und den mit einem Fernsprechwahlnetz verbundenen Datengeräten
Apparatus and method for establishing communication between ISDN data terminals and other terminals served by a switched telephone network

(30) Priorité: 20.02.1991 FR 9102026
(43) Date de publication de la demande: 26.08.1992
(73) Titulaire: ALCATEL BUSINESS SYSTEMS, F-75008 Paris (FR)
(72) Inventeur: Allouis, Jacques, F-67540 Ostwald (FR); Fuhrer, Jean-Claude, F-67640 Fegersheim (FR)
(74) Mandataire: Schaub, Bernard

(56) Documents cités:
- US-A- 4 718 082
- COMMUNICATION & TRANSMISSION, vol. 9, no. 3, septembre 1987, pages 35-50, Paris, FR; J.-L. LAVOISARD et al.: "Les installations terminales d'abonnes"
- DATA COMMUNICATIONS INTERNATIONAL, vol. 18, no. 3, mars 1989, pages 85-86,89- 91,94-96,99-100, New York, US; A.J. WEISSBERGER: "The evolving versions of ISDN's terminal adapter"
- HITACHI REVIEW, vol. 37, no. 1, fevrier 1988, pages 23-30, Toyko, JP; D.L. FOOTE et al.: "Data communications and networking with the hitachi HCX5000 PBX"

## Description

L'invention concerne un agencement chargé d'assurer l'établissement de communications entre des terminaux de données asynchrones dits locaux d'une installation numérique à intégration de services, où ces terminaux sont reliés à une terminaison numérique d'abonné desservie par un réseau RNIS, et d'autre terminaux de données asynchrones desservis par un réseau téléphonique commuté auquel la terminaison est reliée, ainsi qu'un procédé d'établissement de communication correspondant.

D'une manière générale, la transmission d'informations d'un terminal source vers un terminal collecteur au travers d'un support de transmission implique la mise en oeuvre d'un équipement permettant d'agir sur le signal fourni par le terminal source pour le rendre transmissible par le support.

Cet équipement est classiquement dénommé modem, lorsque le support de transmission est une liaison analogique bidirectionnelle établie entre deux terminaux émetteurs récepteurs et que la transmission implique une modulation d'une fréquence porteuse au niveau de chaque source et une démodulation correspondante au niveau de chaque collecteur.

Chaque terminal de données asynchrone desservi par un réseau analogique dispose donc d'un modem individuel, ou éventuellement partagé, pour ses communications au travers de ce réseau, ce modem étant susceptible d'être ou non incorporé dans ce terminal, suivant les besoins.

L'article "Les installations terminales d'abonnés" publié à Paris, par J. L. LAVOISARD & al dans le numéro 3 de la revue "Communication et Transmission" de Septembre 1987 décrit des agencements tels qu'envisagés ci-dessus et ceci dans le cadre d'installation RNIS.

Les recommandations du CCITT concernant les réseaux numériques à intégration de services (RNIS) prévoient le raccordement de terminaux d'usager, soit directement dans le cas de terminaux qui sont spécifiquement conçus pour de tels réseaux RNIS et qui sont référencés TE1, soit par l'intermédiaire d'un adaptateur, référencé AT, si les caractéristiques du terminal concerné, référencé TE2, ne permettent pas son raccordement direct, ceci étant le cas de nombreux terminaux existants et notamment celui des terminaux téléphoniques analogiques ou encore celui des terminaux de données numériques de type ordinateur individuel.

D'une manière générale, les recommandations CCITT prévoient le raccordement d'un terminal TE1 ou d'un adaptateur AT à un réseau RNIS au niveau d'un point de référence dénommé S du modèle architectural défini par le CCITT pour ce type de réseau; l'accès, dit de base, à ce niveau étant usuellement référencé S0.

De manière connue, ce modèle prévoit une structure constituée d'une suite de un à quatre groupements pour relier les terminaux d'une installation d'usager à un commutateur de rattachement dans un réseau RNIS, ces groupements s'interfaçant au niveau de points de référence respectivement dénommés R, S, T, U et V.

Le point de référence V correspond à la frontière entre le commutateur de rattachement d'une installation d'usager à un réseau RNIS et l'équipement d'extrémité de transmission référencé TL, qui est associé à ce commutateur et qui termine la liaison de transmission desservant l'installation d'usager supposée distante.

Le point de référence U correspond à l'interface de transmission entre un équipement d'extrémité TL et un équipement dénommé terminaison numérique de réseau TNR qui est situé au niveau de l'installation d'usager.

Le point de référence T correspond à l'interface, dite d'accès de base, entre une terminaison numérique de réseau TNR et un équipement dénommé terminaison numérique d'abonné TNA ou NT2 qui dans la pratique correspond à un commutateur privé, une installation d'intercommunication, un réseau local d'entreprise...

Le point de référence S correspond à l'interface entre une terminaison numérique d'abonné TNA et un terminal d'usager TE1 de type RNIS ou entre une terminaison numérique d'abonné TNA et un adaptateur référencé AT, lorsque le terminal d'usager desservi est un terminal TE2 qui n'a pas été prévu pour être raccordé à un réseau RNIS, un point de référence général R ou spécifique, tel Z, désignant l'interface de raccordement de ce terminal TE2.

Le point de référence Z correspond à une interface d'accès d'un terminal TE2, initialement destiné à être raccordé à un réseau téléphonique analogique, par l'intermédiaire d'une ligne téléphonique à deux fils où de manière connue se superposent une téléalimentation en courant continu, associée à une signalisation par ouverture et fermeture de boucle, et une transmission bidirectionnelle d'informations correspondant soit à des signaux de parole transmis sous forme analogique, soit à des signaux de données et/ou de signalisation transmis sous forme multifréquence ou par modulation de porteuse. Comme indiqué ci-dessus ce terminal TE2 analogique est alors nécessairement relié au réseau RNIS via un adaptateur AT ou via un agencement incorporant les fonctionnalités d'un tel adaptateur.

Les informations qui sont émises sous forme analogique par ce type de terminaux TE2, doivent être transcodées sous forme numérique avant d'être transmises sur un réseau RNIS, puisque tout terminal raccordé à un tel réseau, ne peut communiquer que sous forme numérique par son intermédiaire.

Toutefois les réseaux RNIS ne viennent que progressivement s'implanter dans la structure maillée préexistante que constituent les réseaux téléphoniques commutés analogiques, à laquelle ils doivent se raccorder pour permettre l'établissement de communications entre les usagers déjà raccordés à un réseau RNIS et ceux qui ne le sont pas encore.

Ceci pose un problème particulier dans le cas de communications entre des terminaux de données asynchrones d'une installation numérique à intégration de services desservie par un réseau RNIS et des terminaux de données asynchrones desservis par un réseau téléphonique commuté analogique RTC, auquel l'installation est reliée soit directement, soit par l'intermédiaire du réseau RNIS.

En effet, les modems desservant les terminaux de données d'un réseau RTC sont prévus pour une transmission des données d'information sous forme de signaux analogiques modulés en fréquence ou phase dans la bande des fréquences vocales.

Il est bien entendu possible de numériser ces signaux analogiques au moyen de cofidecs pour permettre leur transmission par un réseau RNIS d'une manière analogue à celle mise en oeuvre pour les signaux de parole, comme cela se fait au niveau des passerelles établies entre un réseau RTC et un réseau RNIS interconnectés.

Par contre, ces signaux analogiques numérisés ne peuvent être interprétés par un terminal TE1 ou TE2 d'installation numérique à intégration de services que si celui-ci dispose d'un modem approprié lui permettant d'obtenir des signaux qu'il puisse exploiter.

Or un terminal d'une telle installation ne dispose normalement pas d'un tel modem, s'il n'est pas spécialisé dans les communications avec des terminaux rattachés à un réseau RTC, un adaptateur, interne ou externe étant suffisant pour lui permettre de communiquer avec les terminaux TE1 ou TE2 qui lui correspondent de l'installation qui le comporte et du réseau RNIS auquel est rattachée cette installation.

De plus pour des raisons économiques et dans la mesure où les besoins d'accès à des terminaux de données rattachés à un réseau RTC à partir de terminaux d'une installation numérique à intégration de services sont limités, il est généralement souhaité de limiter le nombre de modems de l'installation qui permettent d'accéder aux terminaux de réseau RTC, une solution étant de permettre l'emploi du ou des modems appropriés en pool, c'est-à-dire tour à tour, en fonction des demandes et des disponibilités, par les terminaux de l'installation.

Toutefois ceci pose des problèmes en particulier pour un terminal demandeur d'une installation dans la mesure où ce terminal doit établir une communication dans l'installation avec un modem local, ici dit complémentaire, permettant de communiquer avec un réseau RTC, au travers de cette installation et éventuellement du réseau RNIS à laquelle elle est rattachée, puis une communication distante entre ce modem complémentaire et un modem distant et correspondant de desserte du terminal à atteindre, au travers du réseau RTC et éventuellement du réseau RNIS, la communication locale initiale étant simultanément maintenue.

Il existe alors un risque d'interprétation erronée de la numérotation nécessaire à l'établissement de la communication distante au cours de la communication locale, au niveau de l'installation locale, par exemple par l'adaptateur AT d'un terminal TE2, et de mauvaise transmission de la numérotation de la communication distante au modem local de communication avec le réseau RTC.

L'invention propose donc un agencement comprenant une installation numérique à intégration de services dans laquelle des terminaux de données asynchrones dits locaux sont reliés à une terminaison numérique d'abonné desservie par un réseau RNIS, permettant d'assurer l'établissement de communications entre ces terminaux locaux et d'autre terminaux de données asynchrones desservis par un réseau téléphonique commuté auquel la terminaison est reliée soit directement soit via le réseau RNIS, chacun des terminaux de données asynchrones locaux concernés disposant individuellement, d'une part, d'un adaptateur interne ou externe, pour ses communications avec d'autres terminaux locaux dans l'installation via la terminaison à laquelle il est relié à un niveau de référence normalisé S, et éventuellement d'un modem individuel et, d'autre part, d'au moins un premier protocole de mise en communication, tel un protocole V25bis, pour ses dialogues avec les autres terminaux de données de l'installation et d'un second protocole de mise en communication, tel un protocole HAYES, pour les dialogues via modem. (Hayes est une marque de la société américaine Hayes Microcomputer Products, Inc).

Selon une caractéristique de l'invention, l'installation comporte au moins un modem local, dit complémentaire, individuellement relié, d'une part, à un niveau de référence normalisé S, de l'installation par un adaptateur V24/S0, comme les terminaux de données asynchrones locaux de l'installation pour permettre la mise en communication de ce modem local avec ces derniers sous forme numérique, d'autre part, à un niveau de référence normalisé Z pour permettre sa mise en communication avec un modem distant de réseau téléphonique commuté.

L'invention propose aussi un procédé d'établissement de communications entre des terminaux de données d'une installation numérique à intégration de services qui est desservie par un réseau RNIS, qui dispose d'un agencement tel que défini ci-dessus pour ses communications avec d'autres terminaux de données desservis par un réseau téléphonique commuté RTC et où chaque terminal de données asynchrone de l'installation dispose localement d'un adaptateur pour ses communications à l'intérieur de l'installation à laquelle ce terminal considéré est relié, à un niveau de référence normalisé S.

Selon une caractéristique de l'invention, l'établissement d'une communication par un terminal de données asynchrone de l'installation avec un terminal de données asynchrone correspondant distant, desservi par un réseau RTC auquel l'installation est reliée, éventuellement par le réseau RNIS auquel elle est rattachée, est obtenu progressivement par mise en place initiale d'une communication locale, entre le terminal de données asynchrone local et un modem local dit complémentaire, où les dialogues d'établissement s'effectuent sous protocole V25 bis, suivie d'un prolongement de cette communication du modem local complémentaire concerné vers le terminal de données asynchrone distant, desservi par un réseau RTC, où les dialogues d'établissement entre le terminal de données asynchrone et le modem complémentaire locaux s'effectuent sous protocole HAYES.

L'invention, ses caractéristiques et ses avantages sont précisés dans la description qui suit, en liaison avec les figures évoquées ci-dessous.

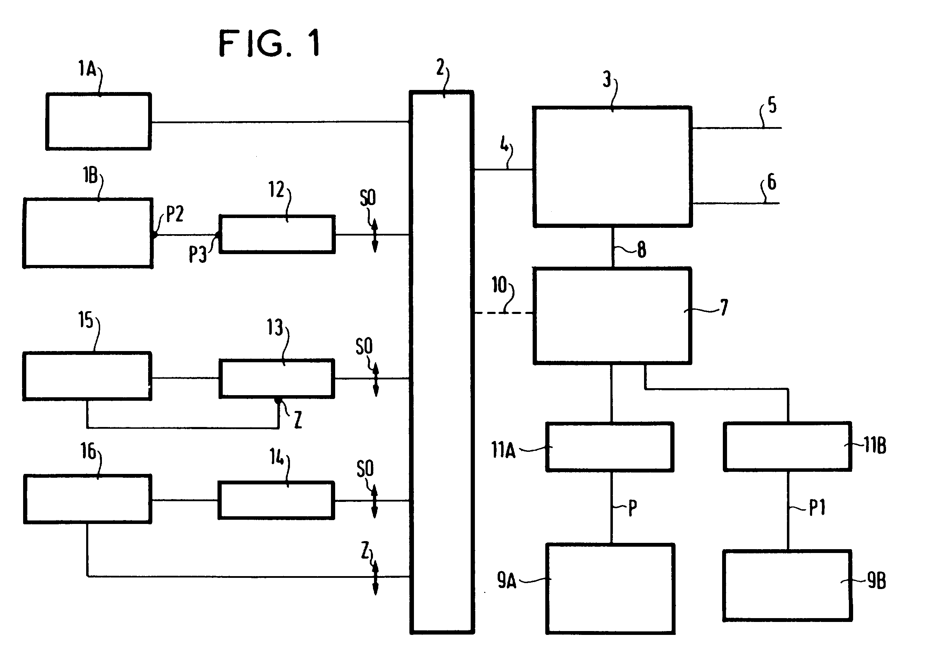

La figure 1 présente un schéma d'un agencement selon l'invention.

Les figures 2 et 3 présentent un diagramme d'établissement et de libération d'une communication par un terminal de type TE2 d'une installation, respectivement pour une liaison locale usuelle et pour liaison distante, selon l'invention.

L'agencement de communications présenté est destiné à permettre d'assurer l'établissement de communications entre des terminaux notamment de données, tels que 1A et 1B, supposés asynchrones, d'une installation numérique à installation de services organisée de manière connue en soi autour d'une terminaison numérique d'abonné TNA, ici référencée 2, qui, comme on l'a vu plus haut, est par exemple un commutateur numérique privé.

Cette terminaison 2 est reliée à un réseau numérique à intégration de services RNIS, référencé 3, par une liaison de transmission 4 de manière à permettre la communication des terminaux qu'elle dessert avec des terminaux compatibles, ici dits correspondants, d'autres terminaisons analogues, non représentées qui sont elles aussi reliées au réseau RNIS par des liaisons de transmission, telles 5 ou 6, analogues à la liaison 4.

Le réseau RNIS 3 est éventuellement relié à un réseau téléphonique commuté RTC, référencé 7, par au moins une passerelle, de manière à autoriser l'établissement de communications entre des terminaux desservis par une des terminaisons numériques d'abonné reliées à lui avec un terminal correspondant, tel que 9a ou 9B, desservi par le réseau RTC 7. Ce dernier peut éventuellement être lui-même relié à la terminaison 2 par une liaison de transmission 10, appropriée usuelle, ici représentée en tireté.

Les terminaux 9A, 9B rattachés au réseau RTC 7 sont ici supposés être des terminaux de données, l'un 9A étant par exemple du type serveur télématique accessible par d'autres terminaux de données de type vidéotex au travers du réseau RTC 7, l'autre 9B étant par exemple un tel terminal ou encore un ordinateur individuel équipé pour échanger des données d'information, notamment des fichiers de données, au travers du réseau RTC 7 avec un terminal compatible lui aussi relié à ce réseau, ou encore pour émuler un terminal vidéotex.

Chacun de ces terminaux 9A, 9B dispose d'un modem, tel 11A ou 11B, pour permettre une transmission sous forme de signaux analogiques modulés en fréquence ou en phase dans la bande des fréquences vocales des données d'informations qu'il émet sous une forme et dans des conditions différentes, par exemple à partir d'un usuel port, ici référencé P1, pour liaison asynchrone de type normalisé RS232C dans le cas de l'ordinateur supposé constituer le terminal 9B, chaque modem assurant aussi les modifications inverses pour les informations circulant en sens inverse sur la liaison.

De manière analogue, les terminaux 1A et 1B rattachés à la terminaison 2 de l'installation considérée sont supposés être des terminaux aptes à émettre et recevoir notamment des données, seule cette exploitation de communication de données étant ici considérée.

Le terminal 1A est par exemple un terminal multiservice destiné à se raccorder au niveau de référence S de l'architecture définie plus haut, soit par exemple au niveau d'un port d'accès de base normalisé S0 de la terminaison 2 à laquelle il est rattaché.

Le terminal 1B est par exemple lui aussi un ordinateur individuel apte à émettre et recevoir des données numériques via un modem interne et par un port P2 qui comme on l'a vu est le plus souvent prévu pour le raccordement d'une liaison asynchrone normalisée RS232C. Ce port est alors relié par cette liaison à un adaptateur AT tel qu'évoqué plus haut qui est ici référencé 12 et qui assure l'adaptation des données d'informations échangées entre un port P3 pour liaison RS232C qui le relie au terminal 1B et l'accès de base S0 par lequel cet adaptateur se relie à la terminaison 2.

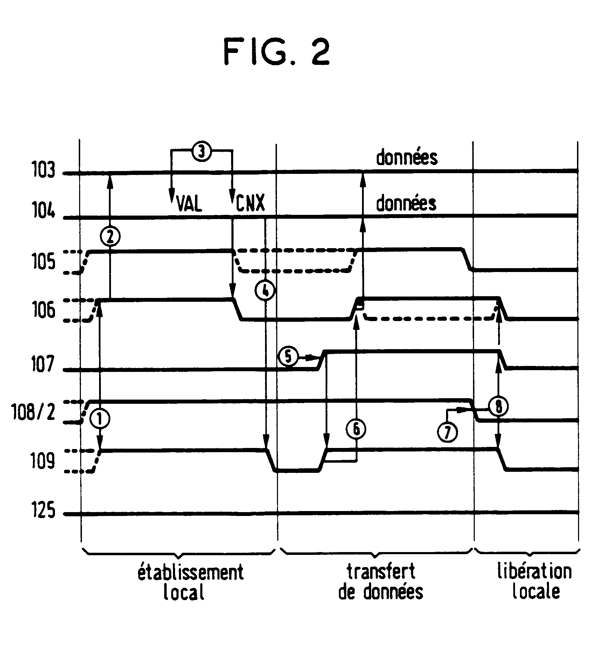

De manière connue les conditions fonctionnelles définies pour les liaisons de type RS232C correspondent à celles recommandées par l'avis V24 du CCITT pour une interface entre un terminal source numérique tel qu'évoqué initialement et un modem. Chaque type de commande ou de signalisation y est matérialisé par un circuit qui est apte à véhiculer des informations à deux états, ces circuits étant par exemple les circuits normalisés dits de série 100 suivants, mentionnés en figure 2:
103 d'émission de données d'une source vers un collecteur
104 de réception de données d'un collecteur
105 de demande pour émettre
106 d'indication "prêt à émettre"
107 d'indication "poste de données prêt"
108/1 de commande de connexion de terminal de données
108/2 d'indication " terminal de données prêt"
109 de détection de signal de ligne reçu
125 d'indication d'appel.

De manière également connue, l'établissement automatique d'une communication vers un terminal local de l'installation à partir d'un terminal source par l'intermédiaire des circuits tels qu'évoqués ci-dessus est régi par les procédures définies dans l'avis V25 bis lorsque le modem du terminal source, soit ici celui du terminal 1B, effectue les opérations de numérotation d'appel pour les communications qu'il souhaite établir.

Les données correspondant aux chiffres du numéro d'appel d'un terminal appelé sont par exemple émis par le terminal 1B sur son circuit 103 dans les conditions précisées en figure 2, soit successivement:
- (1) la fermeture du circuit 108/2 du terminal 1B qui entraîne une procédure de connexion de l'adaptateur 12 et la signalisation au terminal 1B du succès de la procédure ci-dessus par fermeture des circuits 106 et 109 de ce terminal 1B;
- (2) l'envoi d'une numérotation d'appel par le circuit 103 du terminal et d'une indication VAL d'acquittement validant cette numérotation par l'adaptateur 12 sur le circuit 104 du terminal 1B;
- (3) l'adaptateur 12 établit une communication par l'intermédiaire de la terminaison 2, de manière connue et non décrite car sans rapport direct avec l'invention, avec l'équipement correspondant au numéro appelé, soit ici avec un adaptateur 13 ou 14 desservant un modem, dit complémentaire, 15 ou 16 apte à communiquer avec un modem distant, tel que 11A ou 11B, de réseau RTC 7; il ouvre alors le circuit 106 du terminal 1B pour lui interdire l'envoi de nouvelles commandes et indique l'établissement du circuit de communication par envoi d'une indication de connexion CNX sur le circuit 104 de ce terminal 1B;
- (4) l'adaptateur 12 ouvre ensuite le circuit 109 du terminal 1B à la fin de l'envoi de l'indication CNX;
- (5) après une phase de synchronisation de trame, ici par exemple selon la norme V110 ou ECMA 102, entre adaptateur 12 et adaptateur 13 ou 14, l'adaptateur ferme les circuits 107, 109 du terminal 1B pour lui indiquer l'établissement du circuit de communications de données entre les deux adaptateurs reliés entre eux, via la terminaison 2;
- (6) l'adaptateur 12 ferme ensuite le circuit 106 du terminal 1B et passe en mode de transfert de données, le terminal 1B ferme lui-même son circuit 105 de demande d'émission de données.

Une variante de cette procédure, qui ne sera pas décrite ici, est susceptible d'être mise en oeuvre si le numéro d'appel est prévu mémorisé dans l'adaptateur 12 desservant le terminal appelant 1B.

Pour effectuer ces différentes opérations, l'adaptateur 12 comporte par exemple un processeur dûment programmé pour la gestion des communications de type circuit, un circuit support d'interface V24 et un circuit support d'accès de base S0 pour abonné RNIS. Ces circuits sont par exemple l'un de type PSB2110, l'autre de type PEB 2085, commercialisés par la société SIEMENS AKTIENGESELLSCHAFT et ils sont supposés reliés par bus d'une part entre eux, d'autre part au processeur.

Les adaptateurs 13 et 14 sont des adaptateurs normalisés de type AT tels qu'évoqués ci-dessus destinés à être connectés, d'une part, à un accès de base S0 de la terminaison 2, d'autre part, à une liaison de type RS232C aboutissant à une prise correspondante d'un modem 15 ou 16 dans le cas présent.

L'adaptateur 13 comporte de plus un circuit support et une prise de raccordement au niveau d'un point de référence Z pour une liaison desservant un terminal de type TE2 qui comme on l'a vu est initialement prévu pour être raccordé à un réseau téléphonique commuté analogique.

Cet adaptateur 13 dispose alors d'un agencement à cofidec non représenté pour la numérisation des signaux analogiques issus d'un terminal de type TE2 ainsi que pour l'opération inverse sur les signaux reçus pour un tel terminal.

Les modems complémentaires 15 et 16 sont des modems locaux de l'installation considérée, ils sont reliés par l'intermédiaire d'une interface V24 à l'adaptateur 13 ou 14 qui les relient à la terminaison 2 dans cette installation. Chacun d'eux comporte de plus un accès au niveau de point de référence Z pour la transmission de données sous forme de signaux analogiques modulés en fréquence ou phase dans la bande des fréquences vocales permettant de communiquer avec un modem distant d'un terminal desservi par un réseau RTC.

L'accès de niveau Z du modem 15 est ici relié à la prise de même niveau de l'adaptateur 13, alors qu'à titre de variante, l'accès correspondant du modem 16 est montré relié à un accès de niveau Z comporté par la terminaison 2, étant entendu que ceci ne correspond qu'à une possibilité éventuelle.

Comme indiqué plus haut, la mise en communication du terminal 1B avec un terminal 9A ou 9B rattaché au réseau RTC 7 implique l'envoi d'une numérotation d'appel vers ce réseau par le terminal 1B de manière que celle-ci ne soit pas prise en compte par l'adaptateur 12 auquel ce terminal est relié.

A cet effet, le terminal 1B dispose de moyens de dialogue sous protocole HAYES en complément de ceux qui lui permettent de dialoguer sous protocole V25 bis.

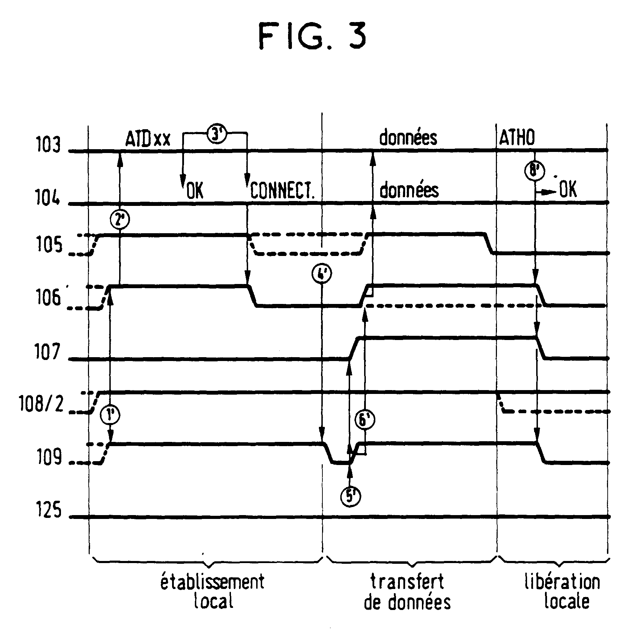

Le passage par l'étape (2) telle que définie ci-dessus se poursuit alors par l'envoi d'une commande normalisée HAYES, de type AT, débutant par un préfixe composé des deux caractères A et T en code ASCII, ce préfixe étant suivi de la numérotation d'appel du terminal distant 9A ou 9B, via le circuit 103 du terminal 1B, cette numérotation étant référencée Dxx sur la figure 3.

Un code retour chariot termine cette commande ATDxx comme prévu selon la procédure HAYES.

Les données constituant cette commande sont transmises à l'adaptateur complémentaire local, tel par exemple 13, par le circuit 103 du terminal 1B au travers de l'adaptateur 12, alors transparent.

L'adaptateur 13 acquitte alors par l'envoi de l'indication OK de commande exécutée sur le circuit 104 du terminal 1B. L'ouverture du circuit 106 de ce terminal est utilisée par l'adaptateur 13 pour indiquer l'établissement du circuit de communication via le modem 15, la terminaison 2 le réseau RTC 7, et le modem 11A, éventuellement par l'intermédiaire du réseau RNIS 3, jusqu'au terminal de données 9A, ici supposé demandé.

L'établissement de cette communication entre modems 15 et 11A s'effectue d'une manière classique qui ne sera pas décrite ici, dans la mesure où elle n'a qu'un rapport indirect avec l'invention.

L'ouverture du circuit 106 empêche aussi l'envoi de nouvelles commandes par le terminal 1B qui reçoit une indication de connexion CONNECT sur le circuit 104, -étape (3')-.

L'étape suivante (4') consiste en l'ouverture du circuit 109 du terminal 1B qui correspond à une indication de détection de signal par l'adaptateur 13.

Une synchronisation est alors entreprise comme indiqué plus haut - étape (5') -, elle est suivie par la fermeture des circuits 107 et 109 par l'adaptateur 13 pour indiquer l'établissement complet du circuit de communication de données entre terminaux concernés.

La fermeture du circuit 106 par l'adaptateur 13 - étape (6') -, indique que ce dernier est prêt à émettre et se poursuit par une phase de transfert de données sous protocole HAYES où les données d'information et éventuellement de commande s'échangent par les circuits 103 et 104 entre le terminal 1B et le modem 15, qui ne sera pas développée ici et qui est symbolisée sur la figure 3 par l'indication +++, insérée entre données et commandes et correspondant à la séquence caractéristique d'échappement du protocole HAYES, ainsi que par les indications "données".

Les données parvenant du terminal 1B au travers du circuit de communication établi, depuis ce terminal, au travers de l'adaptateur 12, de la terminaison 2, de l'adaptateur 13 et du modem 15, via une interface V24 pour ces deux derniers, sont alors transmises par ce modem au modem distant 11A, par l'intermédiaire de l'adaptateur 13 auquel elles reviennent, via un accès Z, après modulation par le modem 15, afin d'être dirigées vers le réseau RTC 7 par la terminaison 2.

Un chemin inverse est suivi par les données communiquées par le terminal 11A au terminal 1B.

En fin de communication, la libération du circuit de communication entre le terminal local 1B et le terminal distant 9A, par le premier nommé, conduit à l'envoi d'une séquence d'échappement +++ suivie d'une commande normalisée HAYES de déconnexion ATHO par ce terminal 1B. Sur le plan local l'adaptateur 13, déclenche la rupture de communication au niveau de la terminaison 2, de la manière habituelle, non décrite ici car non caractéristique de l'invention, pour cette terminaison; L'adaptateur 13 envoie aussi un compte-rendu de commande exécutée composé des deux caractères OK en code ASCII vers le terminal 1B, puis il ouvre les circuits 106,107, 109 - étape (8') - selon un processus analogue à celui mis en oeuvre dans le cas d'une communication locale, voir étape (8) figure 2.

La mise en communication du terminal 1B avec l'un des terminaux 9A ou 9B, via l'adaptateur 14 et le modem 16 s'effectue de manière analogue à celle évoquée ci-dessus mis à part le fait que les signaux échangés entre le modem local 16 et l'un ou l'autre des modems distants 11A ou 11b ne transitent plus par l'adaptateur 14, puisqu'ils empruntent un accès Z que comporte alors la terminaison 2.

De même une communication entre un terminal de données 11A ou 11B desservi par un réseau RTC peut être établie avec un terminal de données 1B d'une installation numérique à installation de services reliée à un réseau RNIS 3 selon un processus équivalent, aisé à déterminer par l'homme de métier au vu de la description ci-dessus, à partir du moment où le terminal 1B de l'installation et le modem complémentaire 15 ou 16 de cette installation qui est prévu compatible disposent l'un et l'autre des protocoles HAYES et V25 bis pour leurs communications.

## Revendications

1. Agencement comprenant une installation numérique à intégration de services, dans laquelle des terminaux de données (1A) asynchrones dits locaux sont reliés à une terminaison numérique d'abonné dite TNA, (2) desservie par un réseau RNIS (3), permettant d'assurer l'établissement de communications entre ces terminaux locaux et d'autres terminaux de données (9A, 9B) desservis par l'intermédiaire d'un réseau téléphonique commuté (7) auquel la TNA est aussi reliée soit directement soit via le réseau RNIS, chacun des terminaux de données asynchrones locaux concernés disposant individuellement, d'une part, d'un adaptateur interne ou externe, pour ses communications avec d'autres terminaux locaux dans l'installation, via la terminaison à laquelle il est relié à un niveau de référence normalisé S, et éventuellement d'un modem individuel et, d'autre part, d'au moins un premier protocole de mise en communication, tel un protocole V25bis, pour ses dialogues avec les autres terminaux de données de l'installation via la terminaison, et d'un second protocole de mise en communication, tel un protocole HAYES, pour les dialogues via modem, caractérisé en ce que l'installation comporte en outre au moins un modem local, dit complémentaire, (15 ou 16) individuellement relié à la terminaison, d'une part à un niveau de référence normalisé S par un adaptateur V24/S0 (13 ou 14) comme les terminaux de données asynchrones locaux de l'installation, pour permettre la mise en communication de ce modem local avec ces derniers sous forme numérique, d'autre part à un niveau de référence normalisé Z pour permettre sa mise en communication avec un modem distant (11A ou 11B) de réseau téléphonique commuté.

2. Agencement selon la revendication 1, caractérisé en ce que chaque modem local, dit complémentaire, relié d'une part à un niveau de référence normalisé S par un adaptateur V24/S0 comme les terminaux de données pour permettre sa mise en communication avec ces derniers sous forme numérique, est relié d'autre part à un port de niveau de référence normalisé Z de cet adaptateur pour ses communications avec un modem distant correspondant de réseau RTC, via le réseau RTC et éventuellement le réseau RNIS avec lequel ce réseau RTC est alors interconnecté.

3. Agencement selon la revendication 1, caractérisé en ce que chaque modem complémentaire local relié d'une part à un niveau de référence normalisé S par un adaptateur V24/S0 comme les terminaux de données pour permettre sa mise en communication avec ces derniers sous forme numérique, est relié d'autre part à un port de niveau de référence normalisé Z de la terminaison numérique d'abonné (2) de l'installation pour ses communications avec un modem distant correspondant de réseau RTC, via le réseau RNIS et ce réseau RTC interconnectés.

4. Procédé d'établissement de communications entre des terminaux de données asynchrones d'une installation numérique à intégration de services qui est desservie par un réseau RNIS, qui dispose d'un agencement selon au moins l'une des revendications 1 à 3 pour ces communications avec d'autres terminaux de données asynchrones desservis par un réseau téléphonique commuté RTC et où chaque terminal de données de l'installation dispose localement d'un adaptateur pour ses communications à l'intérieur de l'installation à laquelle ce terminal considéré est relié à un niveau de référence normalisé S, caractérisé en ce que l'établissement d'une communication par un terminal de données asynchrone approprié de l'installation avec un terminal de données correspondant distant desservi par un réseau RTC auquel l'installation est reliée, éventuellement par le réseau RNIS auquel elle est rattachée, est obtenu progressivement par mise en place initiale d'une communication locale, entre le terminal de données asynchrone local et un modem local dit complémentaire, où les dialogues d'établissement s'effectuent sous protocole V25 bis, suivie d'un prolongement de cette communication du modem local complémentaire concerné vers le terminal de données distant, desservi par un réseau RTC, où les dialogues d'établissement entre le terminal de données asynchrone et le modem complémentaire locaux s'effectuent sous protocole HAYES.

## Patentansprüche

1. Aufbau, der eine ISDN-Anlage enthält, in der lokale, asynchrone Daten-Endgeräte (1A) an einen digitalen Teilnehmer-Endanschluß TNA (2) angeschlossen sind, der von einem ISDN-Netz (3) bedient wird, so daß Nachrichtenverbindungen zwischen diesen lokalen Endgeräten und anderen asynchronen Daten-Endgeräten (9A, 9B) hergestellt werden können, die über ein Telefonvermittlungsnetz (7) bedient werden, an das der digitale Teilnehmeranschluß (TNA) auch entweder direkt oder über das ISDN-Netz angeschlossen ist, wobei jedes der betroffenen lokalen asynchronen Daten-Endgeräte je einerseits einen internen oder externen Adapter für seine Nachrichtenverbindungen mit anderen lokalen Endgeräten in der Anlage über den Endanschluß besitzt, an den es in Höhe des standardisierten Bezugspunkts S angeschlossen ist, sowie ggf. ein individuelles Modem und andererseits mindestens ein erstes Verbindungsaufbauprotokoll, z.B. das Protokoll V25bis, für seine Dialoge mit den anderen Daten-Endgeräten der Anlage über den Endanschluß, sowie ein zweites Verbindungsaufbauprotokoll wie z.B. das HAYES-Protokoll für die Dialoge über Modem besitzt, dadurch gekennzeichnet, daß die Anlage außerdem mindestens ein lokales, komplementäres Modem (15 oder 16) besitzt, das individuell an den Endanschluß einerseits in Höhe des standardisiertes Bezugspunkts S über einen Adapter V24/SO (13 oder 14), wie die asynchronen Daten-Endgeräte der Anlage, zum Aufbau einer Verbindung dieses lokale Modems mit diesen Endgeräten in digitaler Form, und andererseits in Höhe eines standardisierten Bezugsniveaus Z angeschlossen ist, um eine Verbindung mit einem entfernten Modem (11A oder 11B) eines Telefonvermittlungsnetzes herzustellen.

2. Aufbau nach Anspruch 1, dadurch gekennzeichnet, daß jedes lokale komplementäre Modem, das einerseits an ein standardisiertes Bezugsniveau S über einen Adapter V24/SO wie die Daten-Endgeräte angeschlossen ist, um eine Verbindung mit diesen Endgeräten in digitaler Form zu erlauben, andererseits an einen Port des standardisierten Bezugsniveaus Z dieses Adapters angeschlossen ist, um Nachrichtenverbindungen mit einem entsprechenden entfernten Modem eines RTC-Netzes über das RTC-Netz und ggf. das ISDN-Netz zu ermöglichen, mit dem dieses RTC-Netz dann verbunden ist.

3. Aufbau nach Anspruch 1, dadurch gekennzeichnet, daß jedes komplementäre lokale Modem, das einerseits an ein standardisiertes Bezugsniveau S über einen Adapter V24/SO wie die Daten-Endgeräte angeschlossen ist, um eine Verbindung mit diesen Endgeräten in digitaler Form zu erlauben, andererseits an einen Port des standardisierten Bezugsniveaus Z des digitalen Teilnehmer-Endanschlusses (2) der Anlage angeschlossen ist, um die Nachrichtenverbindungen mit einem entsprechenden entfernten Modem eines RTC-Netzes über das ISDN-Netz und dieses damit verbundene RTC-Netz zu ermöglichen.

4. Verfahren zum Aufbau einer Nachrichtenverbindung zwischen asynchronen Daten-Endgeräten einer ISDN-Anlage, die von einem ISDN-Netz bedient wird und einen Aufbau gemäß mindestens einem der Ansprüche 1 bis 3 für die Nachrichtenverbindungen mit anderen asynchronen Daten-Endgeräten enthält, die von einem Telefonvermittlungsnetz RTC bedient werden, wobei jedes Daten-Endgerät der Anlage lokal einen Adapter für die Nachrichtenverbindungen innerhalb der Anlage enthält, an die dieses betrachtete Endgerät in Höhe des standardisierten Bezugsniveau S angeschlossen ist, dadurch gekennzeichnet, daß der Aufbau einer Verbindung von einem geeigneten asynchronen Daten-Endgerät der Anlage zu einem entsprechenden entfernten Daten-Endgerät, das von einem RTC-Netz bedient wird, mit dem die Anlage verbunden ist, ggf. über das ISDN-Netz, an das sie angeschlossen ist, nacheinander durch zuerst einen Aufbau einer lokalen Verbindung zwischen dem lokalen asynchronen Daten-Endgerät und einem komplementären lokalen Modem erfolgt, wo die Dialoge gemäß dem Protokoll V25bis abgewickelt werden, worauf diese Verbindung vom betroffenen komplementären lokalen Modem zum entfernten Daten-Endgerät verlängert wird, das von einem RTC-Netz bedient wird, wo die Dialoge für den Verbindungsaufbau zwischen dem asynchronen Daten-Endgerät und dem komplementären lokalen Modem unter dem HAYES-Protokoll durchgeführt werden.

## Claims

1. A facility including an integrated services digital installation in which "local" asynchronous data terminals (1A) are connected to a network termination, referred to as an "NT2" (2) served by an ISDN network (3), enabling calls to be set up between the local terminals and other data terminals (9A, 9B) served via a switched telephone network (7) to which the NT2 is also connected either directly or via the ISDN network, each of the local asynchronous data terminals in question being individually provided firstly with an internal or an external adapter, for its calls with other local terminals in the installation, via the termination to which it is connected at an S standardized reference level, and optionally with an individual modem, and secondly with at least one first call set-up protocol such as a V25bis protocol, for its dialogs with the other data terminals in the installation via the termination, and with a second call set-up protocol, such as a HAYES protocol, for the dialogs via modem, said facility being characterized in that the installation further includes at least one "additional" local modem (15, 16) individually connected to the termination, firstly at an S standardized reference level via a V24/SO adapter (13 or 14) like the local asynchronous data terminals of the installation, to enable the local modem to be put in communication with said terminals in digital form, and secondly at a Z standardized reference level to enable the local modem to be put in communication with a remote modem (11A or 11B) of a switched telephone network.

2. A facility according to claim 1, characterized in that each additional local modem connected at an S standardized reference level by a V24/SO adapter like the data terminals to enable it to be put in communication therewith in digital form, is connected firstly to a Z standardized reference level port of the adapter for its calls with a corresponding remote modem of an STN, via the STN and optionally the ISDN with which the STN is then interconnected.

3. A facility according to claim 1, characterized in that each additional local modem connected firstly at an S standardized reference level via a V24/SO adapter like the data terminals to enable it to be put in communication therewith in digital form is connected secondly to a Z standardized reference level port of the NT2 (2) of the installation for its calls with a corresponding remote modem of the STN, via the ISDN and the STN as interconnected.

4. A method of setting up calls between asynchronous data terminals of an integrated services digital installation which is served by an ISDN network, which is provided with a facility according at least one of claims 1 to 3 for calls with other asynchronous data terminals served by a switched telephone network (STN), and in which each data terminal in the installation is locally provided with an adapter for its calls within the installation to which the terminal in question is connected at an S standardized reference level, said method being characterized in that a call between a suitable asynchronous data terminal of the installation and a corresponding remote data terminal served by an STN to which the installation is connected, optionally via the ISDN network on which it is parented, is set up by said terminal of the installation progressively by initially setting up a local call between the local asynchronous data terminal and an "additional" local modem, in which local call the setting-up dialogs take place under a V25 bis protocol, followed by extending the call from the additional local modem in question to the remote data terminal, served by an STN, in which extended call the setting-up dialogs between the asynchronous data terminal and the additional local modem take place under a HAYES protocol.
